# EUROPÄISCHE PATENTSCHRIFT

(11) **EP 1 247 477 B1**
(45) Veröffentlichungstag und Bekanntmachung des Hinweises auf die Patenterteilung: **01.02.2006**
(21) Anmeldenummer: 02007532.1
(22) Anmeldetag: 03.04.2002
(51) Int. Cl.: A47C 20/04, F16H 25/20, H02K 7/06, H02K 7/116

(54) **Elektromotorischer Stelltrieb**
Electromotive actuator
Mécanisme de commande à moteur électrique

(30) Priorität: 04.04.2001 DE 20105871 U
(43) Veröffentlichungstag der Anmeldung: 09.10.2002
(73) Patentinhaber: Dewert Antriebs- und Systemtechnik GmbH, 32278 Kirchlengern (DE)
(72) Erfinder: Roither, Andreas, 32130 Enger (DE); Bokämper, Ralf, 32312 Lübbecke (DE)
(74) Vertreter: Dantz, Jan Henning

(56) Entgegenhaltungen:
- EP-A- 0 913 600
- DE-A- 3 938 353
- DE-U- 8 229 628
- FR-A- 2 761 833

## Beschreibung

Die Erfindung betrifft einen elektromotorischen Stelltrieb, insbesondere Möbelantrieb, der zur Erzeugung einer Linearbewegung und/oder einer Drehbewegung mit einem Gehäuse ausgestattet ist, in dem zumindest ein Motor und ein die Motordrehzahl reduzierender Getriebeblock angeordnet sind, dessen Abtriebsglied als Rotationskörper ausgebildet ist, der in einer ersten Ausführung mit einer zentrischen Innengewindebohrung versehen ist, in die eine gegen Drehung gesicherte Spindel eingedreht ist.

Der In Frage kommende elektromotorische Stelltrieb wird besonders für die verstellbaren Bauteile von Möbeln, insbesondere für Sitz- und Liegemöbel verwendet. Es ist bekannt, dass derartige Möbel in vielen Ausführungsformen auf dem Markt sind. Häufig sind die vorhandenen Einbauräume äußerst gering, so dass die verwendeten elektromotorischen Stelltriebe in einer äußerst kompakten Bauweise konstruiert werden müssen. Es ist unvermeidbar, dass die elektromotorischen Stelltriebe an die Ausführungsformen verschiedener Hersteller angepaßt werden müssen. Dadurch werden zusätzliche Kosten verursacht.

Aus der EP 0 913 600 A1 ist eine Einrichtung zur Erzeugung einer Längsbewegung und/oder einer Drehbewegung bekannt. Diese Einrichtung ist mit vier Motoren ausgestattet, auf deren Motorwellen jeweils hintereinander zwei Ritzel aufgesetzt sind. Diese Ritzel treiben ein gemeinsames Sonnenrad an. Zum Antrieb werden üblicherweise nur drei Motoren in Betrieb gesetzt, während der vierte Motor als Generator arbeitet. Ein Teil der Elektromotoren ist jeweils mit einer elektromagnetisch arbeitenden Bremse ausgestattet, um die Last abgeschalteten Motoren zu halten.

In das Sonnenrad ist eine Spindelmutter fest eingesetzt, in die eine Spindel eingedreht ist. Bei Drehung des Sonnenrades dreht sich auch die Spindelmutter mit gleicher Drehzahl, so dass die Spindel in ihrer Längsrichtung verfährt. Dieser Literaturstelle ist nicht zu entnehmen, wie die Einrichtung ausgelegt ist, um eine Drehbewegung zu erzeugen.

Der Erfindung liegt die Aufgabe zugrunde, einen elektromotorischen Stelltrieb in einer konstruktiv einfachen Bauweise so zu gestalten, dass er vielseitig einsetzbar und dass die Anzahl der an die Funktion anzupassenden Bauteile so gering wie möglich ist.

Die gestellte Aufgabe wird gemäß einer zweiten Ausführung gelöst, indem der Rotationskörper anstelle der Innengewindebohrung mit einer zentrischen, insbesondere mehreckigen Bohrung ausgestattet ist, und dass das Koppelelement eine schließend formschlüssig darin eingesetzte Profilstange ist, und dass wahlweise in einer dritten Ausführung an zwei senkrecht zum Koppelelement stehenden Wänden des Gehäuses Aufnahmeelemente 17, 18 für feststehende Flanschführungsrohre festgelegt sind.

Durch die Gestaltung nach Art eines Baukastens ist es möglich, dass bestimmte Bauteile an die jeweilige Funktion angepaßt werden können, beispielsweise kann das Abtriebsglied des Getriebeblockes in verschiedenen Ausführungen gefertigt werden, so dass es je nach Verwendungszweck des Stelltriebes in den Antrieb eingebaut werden kann. Wird der Stelltrieb als Linearantrieb verwendet, wird sich das Koppelelement entweder linear bewegen oder es führt eine Drehbewegung aus, wodurch sich ein angetriebenes Bauteil linear bewegt. Wird der Stelltrieb als Rotationsantrieb verwendet, könnte das Koppelelement ebenfalls in Drehung versetzt werden, es könnte jedoch darauf ein Bauteil festgesetzt werden, beispielsweise ein Hebel, der dann eine Schwenk- oder Drehbewegung ausführt. Sofern in den Rotationskörper eine gegen Drehung gesicherte Gewindestange eingesetzt ist, verschiebt sich diese in ihrer Längsrichtung und bildet das Abtriebsglied des Stelltriebes. Bei einer anderen Ausführung des Linearantriebes wird bei eingeschaltetem Antriebsmotor der Rotationskörper in Drehung versetzt und das Gehäuse des Stelltriebes einschließlich der darin angeordneten Bauteile bewegen sich auf der feststehenden Gewindestange in deren Längsrichtung. Das Abtriebselement dieses Stelltriebes wäre in diesem Fall das Gehäuse. Es ist dann notwendig, dass das Gehäuse entsprechend seinem Verfahrweg geführt wird. Dies erfolgt zweckmäßigerweise mittels einer Längsführung.

Sofern bei einer weiteren Ausführung der Rotationskörper mit einer zentrischen und insbesondere mehreckigen oder sonstwie profilierten Bohrung ausgestattet ist, und bei der das Koppelelement eine schließend und formschlüssig darin eingesetzte Profilstange ist, wird der Stelltrieb zu einem Rotationsantrieb, da bei Drehung des Schneckenrades die Profilstange ebenfalls in Drehung versetzt wird. Auf die Profilstange kann dann ein Bauteil, vorzugsweise ein Hebel oder ein Rad aufgesetzt werden, um damit ein Bauteil zu verstellen. Diese Profilstange kann auch gegenüber zwei rechtwinklig dazu stehenden Gehäusewandungen vorstehen, so dass auch dieser Antrieb als ein Doppelantrieb bezeichnet werden kann. Bei bestimmten Ausführungen kann es sinnvoll sein, wenn an zwei senkrecht zum Koppelelement stehenden Wänden zwei Aufnahmeelemente für feststehende Flanschführungsrohre festgelegt sind.

Der das Abtriebsglied des Getriebeblockes bildende Rotationskörper kann als Schneckenrad ausgebildet sein, wobei das Koppelelement auch eine drehfest mit dem Rotationskörper verbundene Gewindespindel sein kann. Auf diese Gewindespindel kann dann eine Spindelmutter oder es können mehrere Spindelmutter aufgesetzt werden, die gegen Drehung gesichert sind. In einer bevorzugten Ausführungsform ist vorgesehen, dass die Gewindespindel gegenüber zwei einander gegenüberliegenden Wandungen des Gehäuses vorsteht, und dass vorzugsweise auf jedes der beiden vorstehenden Bereiche eine gegen Drehung gesicherte Spindelmutter aufgesetzt ist. In diesem Fall könnte der Stelltrieb als Doppellinearantrieb bezeichnet werden. In einer speziellen Ausführungsform ist dann vorgesehen, dass auf jede Spindelmutter ein Rohr fest aufgesetzt ist, dessen freies Ende mit einem Anschlußteil, vorzugsweise mit einem Gabelkopf bestückt ist. Das jeweilige Anschlußteil wird direkt oder indirekt mit einem zu verstellenden Bauteil gekoppelt. Da diese Bauteile unterschiedlich gestaltet sind, ist in weiterer Ausgestaltung vorgesehen, dass jedes Anschlussteil auswechselbar an dem jeweiligen Hubrohr oder der Gewindespindel festgelegt ist, so dass bei der Fertigung das von dem Käufer gewünschte Anschlußteil montiert werden kann. Darüber hinaus ist es vorteilhaft, dass im Bedarfsfall auch nachträglich die Anschlußteile ausgetauscht werden können.

Es kann erforderlich werden, dass das Gehäuse beispielsweise an Rahmenteilen eines Möbels festgelegt werden muß. Es ist deshalb vorgesehen, dass das Gehäuse oder daran befestigte Getriebeelemente mit mehreren Befestigungsflächen versehen ist, so dass diese wahlweise benutzt werden können. Besonders vorteilhaft, wenn die Befestigungselemente Laschen sind, die mittels Schrauben befestigt werden. Der Stelltrieb kann dann nicht nur an jeweils unterschiedlichen Flächen festgelegt werden, sondern die einzelnen Befestigungselemente oder Laschen können in verschiedenen Stellungen zum Gehäuse stehen. Dadurch wird eine individuelle Befestigungsmöglichkeit geschaffen.

Da der erfindungsgemäße Stelltrieb auch als Universalantrieb für die verschiedensten Einsatzmöglichkeiten bezeichnet werden kann, kann es erforderlich werden, dass das Stromzuführungskabel und ggf. auch die Steuerleitungen von verschiedenen Stellen aus zugeführt werden müssen. Es ist deshalb vorgesehen, dass die in einer Gehäusewand vorgesehene Kabelaufnahme bzw. die Kabelzuführung für Stromzuführungskabel oder für die Stromzuführungskabel im Versatz zu den Anschlüssen des Motors stehen. Diese Kabelaufnahme bzw. Kabelverschraubung kann derart gesetzt werden, dass das Stromzufiihrungskabel ohne Knickung und Umlenkung angeschlossen werden kann. Insbesondere bei einer Ausführung, die mit einer rotierend antreibbaren Spindel ausgerüstet ist, ist es aus Gründen des Unfallschutzes und/oder des Dichtigkeitsgrades zweckmäßige, wenn auf die gegenüber dem Gehäuse vorstehenden Teile des Koppelelements jeweils ein Faltenbalg gestülpt ist, der mit einem Ende am Gehäuse und mit dem anderen Ende an dem ausfahrbaren Bauteil befestigt ist. Der Faltenbalg ändert dann seine Länge. Zur Festlegung am Gehäuse kann es zweckmäßig sein, wenn der Faltenbalg an einer Platte festgesetzt ist, die mit der Wand des Gehäuses verschraubt wird.

Bei einer Ausführung mit einer rotierend antreibbaren Spindel ist vorgesehen, dass auf diese an einem Endbereich ein Anschlußteil, vorzugsweise ein Gabelkopf auswechselbar festgesetzt ist, und dass auf dem anderen Endbereich eine Abdeckkappe aufgestülpt ist. Die Endkappe kann auch noch verwendet werden, um den Stelltrieb an Möbelbauteilen festzulegen. Außerdem kann sie verstellbar sein, so dass der Verschiebeweg der Spindel begrenzt ist. Zur Fixierung der Endstellungen der Spindel könnte der Stelltrieb auch mit Endschaltern ausgestattet sein. Zur Verwendung bei Positionieraufgaben und/oder Wiederanfahren von bestimmten Stellungen sind Mittel zur Erkennung des Drehwinkels, der Geschwindigkeit und der Position der Antriebselemente und/oder des Motors vorgesehen, wie beispielsweise Hallsensoren, Lichtschranken, Tachogeneratoren u.ä. Bauelemente.

Das Gehäuse ist zweckmäßigerweise im Grundriß viereckig gestaltet, es ist zweckmäßigerweise mit zwei fluchtenden Lagerbohrungen versehen, die in zwei Gehäusewänden vorgesehen sind, die parallel und im Abstand zur Motordrehachse stehen. Zweckmäßigerweise ist das Gehäuse zweiteilig ausgebildet, wobei die beiden Gehäuseteile miteinander verschraubt sind. Die Trennebene der beiden Gehäuseteile steht zweckmäßigerweise senkrecht zur Motordrehachse. Damit Anlageflächen entstehen, ist vorgesehen, dass zwei Außenflächen, die senkrecht zum Koppelelement stehen, planparallel ausgebildet sind. Da der Stelltrieb besonders für enge Einbauräume verwendet wird, ist vorgesehen, dass zur Erzielung einer kompakten Bauweise an wenigstens einer Wand des Gehäuses Aufnahmen für eine form- und/oder kraftschlüssige Aufnahme einer Steuereinheit vorgesehen sind. Diese Aufnahme könnte beispielsweise nach Art einer Schwalbenschwanzführung oder durch zwei Winkelstege gestaltet sein.

In weiterer Ausgestaltung kann das Gehäuseteil, welches als Motortopfdeckel bezeichnet wird, mit einem Distanzring an das Gehäuseteil geschraubt werden. Es ist möglich, mehrere Distanzringe zu verwenden. Dadurch wird je nach Bedarf im Gehäuse mehr Platz geschaffen, z. B. für Motoren mit längerem Gehäuse, für zusätzliche und/oder größere Motortopfplatinen, die sich auf dem Motor befinden, u. ä. Dinge. Darüber hinaus hat man so die Möglichkeit, ein größeres Steuergehäuse auf den Antrieb zu schieben, dem so z. B. mehr Halt gegeben wird.

An Hand der beiliegenden Zeichnungen wird die Erfindung noch näher erläutert.

Es zeigen:
- Figur 1: Eine Ausführungsform des erfindungsgemäßen elektromotorischen Stelltriebes in einer perspektivischen, teilweise sprengbildlichen Darstellung,
- Figur 2: eine weitere Ausführung des erfindungsgemäßen Stelltriebes in einer perspektivischen Darstellung,
- Figuren 3-5: eine dritte Ausführungsform des erfindungsgemäßen Stelltriebes in drei verschiedenen Ansichten,
- Figur 6: ein Distanzring als Einzelheit in perspektivischer Darstellug,
- Figur 7: das Gehäuse mit einem Distanzring und
- Figur 8: das Gehäuse mit mehreren Distanzringen.

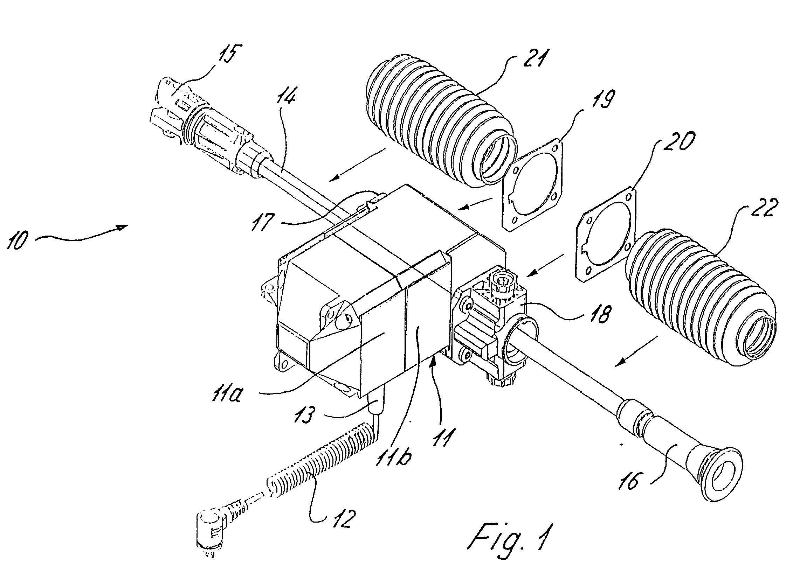

Der in der Figur 1 dargestellte elektromotorische Stelltrieb 10 ist mit einem noch näher erläuterten Gehäuse 11 ausgestattet, in dem Antriebselemente montiert sind, die nachfolgend noch beschrieben werden. Das Gehäuse 11 besteht aus zwei Gehäuseteilen 11a, 11b die miteinander verschraubt sind. Das Gehäuseteil 11a ist als Motortopf ausgestattet und nimmt den nicht dargestellten Antriebsmotor auf. Die Stromversorgung erfolgt über ein Zuleitungskabel 12, welches in eine Kabelaufnahme bzw. eine Kabelverschraubung 13 mündet, die am Gehäuseteil 11a angesetzt ist. Die Kabelaufnahme 13 könnte an jeder beliebigen Stelle des Gehäuseteiles 11a angesetzt sein. Die genaue Positionierung richtet sich nach den Einbauverhältnissen entsprechend dem Verwendungszweck des elektromotorischen Stelltriebes 10. Die Kabelaufnahme 13 steht bevorzugt in einem Versatz zu den Anschlußklemmen des Motors. Das Gehäuse 11 bzw. die Gehäuseteile 11a, 11b sind im Querschnitt viereckig gestaltet, wobei die Ecken abgeflacht sein können. Mittels des Motors wird über einen Antriebsblock bei der Ausführung nach der Figur 1 eine Spindel 14 rotierend angetrieben. Die Spindel 14 verschiebt sich je nach Drehrichtung in ihrer Längsrichtung. Im dargestellten Ausführungsbeispiel ist auf ein Ende eine Anschlußteil in Form eines Gabelkopfes 15 drehbar gelagert. An dem Gabelkopf 15 kann direkt oder indirekt ein zu verstellendes Bauteil angeschlossen werden. Die Spindel 14 kann gegenüber den beiden, quer dazu stehenden Enden der Gehäuseteile 11a, 11b vorstehen. Auf das andere Ende der Spindel 14 ist eine Abschlußkappe 16 aufgesteckt. Der Getriebeblock enthält als Abtriebsglied einen rotierend antreibbaren Körper, der bei der Ausführung gemäß der Figur 1 eine Innengewindebohrung aufweist, so daß sich die Spindel 14 in ihrer Längsrichtung verschiebt. Der Getriebeblock besteht in bevorzugter Ausführung aus einer vom Antriebsmotor angetriebenen Schnecke und einem damit in Eingriff stehenden Schneckenrad. Im dargestellten Ausführungsbeispiel wird die Spindel 14 noch durch 2 Aufnahmeelemente 17, 18 an das Gehäuseteil 11b angesetzt. Diese Aufnahmeelemente könnten auch noch als wahlweise ansetzbare Gehäuseteile bezeichnet werden. Entgegen der Darstellung nach der Figur 1 könnten die Aufnahmeelemente 17, 18 auch mit Dichtungen 19, 20 angeschraubt werden, die einen bestimmten Dichtigkeitsgrad des Antriebes gewährleisten. Die Aufnahmeelemente 17, 18 dienen zur Halterung jeweils eines Faltenbalges 21, 22, die die überstehenden Bereiche der Spindel 14 übergreifen. Die einander abgewandt liegenden Enden sind in nicht näher erläuterterweise mit der Spindel 14 verbunden. Entgegen der Ausführung nach der Figur 1 könnte die Spindel auch wesentlich kürzer sein und rotierend angetrieben werden. Auf die Spindel wären dann ein eine oder zwei Spindelmuttern aufgesetzt, die gegen Drehung gesichert sind und mit jeweils einem Hubrohr bestückt sind, welches dann zusammen mit der Spindelmutter ein und ausfährt. Die Hubrohre könnten in einem direkt oder indirekt an das Gehäuseteil 11b angesetzten Flanschrohr geführt sein. Auch die Verwendung eines Faltenbalges anstelle des Flanschrohres ist denkbar. Die zuvor beschriebenen Ausführungen sind Linearantriebe, da die Anschlußteile 15, 16 ausschließlich linear bewegt werden.

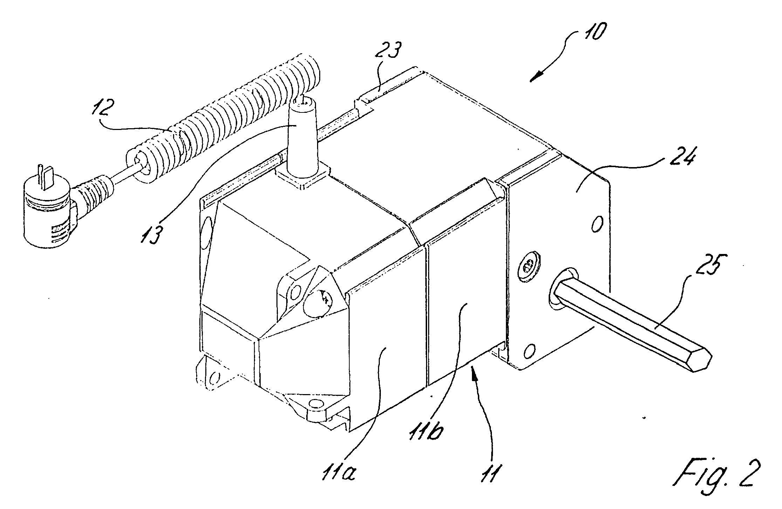

Die Figur 2 zeigt eine weitere mögliche Ausführung des erfindungsgemäßen elektromotorischen Stelltriebes 10. Das Gehäuse ist im wesentlichen gleichbleibend gestaltet, jedoch in einer um 180 Grad gedrehten Lage gezeichnet. An Stelle der Aufnahmeelemente 17 und 18 ist das Gehäuse mit zwei Abschlußplatten 23, 24 bestückt, die eine Öffnung aufweisen, durch die eine Profilstange 25 geführt ist, die im dargestellten Ausführungsbeispiel einen sechseckigen Querschnitt aufweist. Das nicht dargestellte Abtriebsglied des Getriebeblockes, beispielsweise das Schneckenrad, ist mit einer entsprechenden zentrischen Bohrung ausgestattet, so daß ein Formschluß entsteht, so daß die Profilstange 25 mit der gleichen Drehzahl wie das Abtriebsglied angetrieben wird. Entgegen der Darstellung könnte auch die Profilstange 25 gegenüber den beiden Wänden des Gehäuses vorstehen. Diese Ausführung ist im Gegensatz zu der Ausführung nach der Figur 1 ein Rotationsantrieb. Auf die Profilstange 25 könnte beispielsweise ein Verstellhebel oder ein Antriebsrad drehfest aufgesetzt sein. Die Gestaltung des Gehäuses könnte auch von der nach der Ausführung der Figur 1 abweichen, da die Besonderheit dieses elektromotorischen Stelltriebes 10 darin liegt, daß es ein Rotationsantrieb ist.

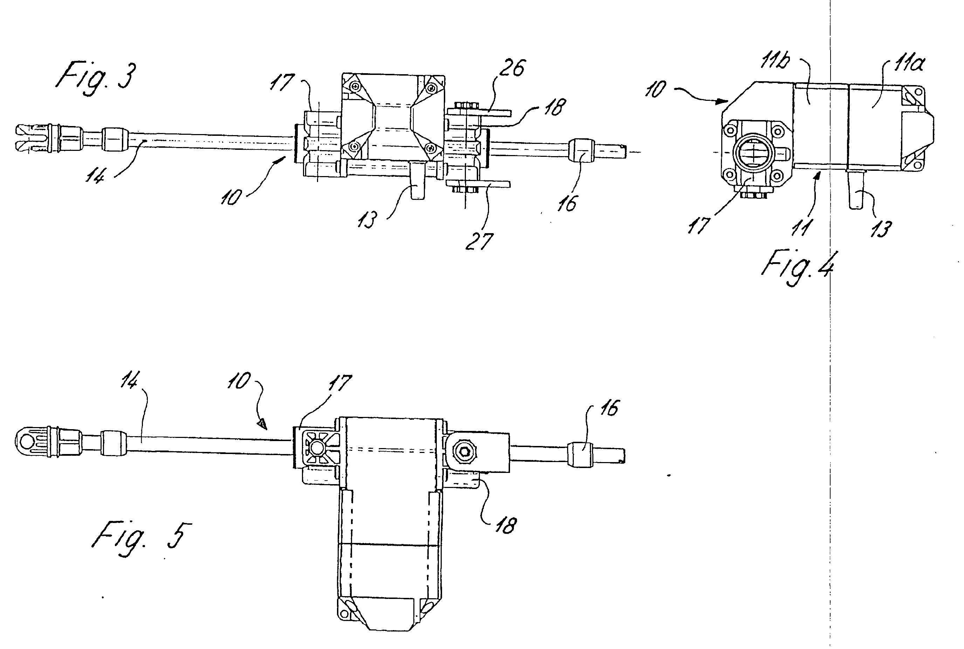

Die Ausführung gemäß den Figuren 3 bis 5 entspricht im grundsätzlichen Aufbau der Ausführung nach der Figur 1. Die Besonderheit dieser Ausführung liegt darin, daß an eines der Aufnahmeelemente 18 zwei Befestigungslaschen 26, 27 angeschraubt sind. Im Gegensatz zur dargestellten Ausführung könnten diese auch an dem Aufnahmeelement 17 oder auch an beiden Aufnahmeelementen 17, 18 angeordnet sein. Wo diese Befestigungslaschen 26, 27 letztendlich angeordnet sind, richtet sich nach den Einbauverhältnissen. Die Besonderheit ist darin zu sehen, daß sie innerhalb eines großen Schwenkbereiches verstellbar sind, so daß dadurch die Anpassungsfähigkeit gegeben ist. Entgegen der Ausführung nach den Figuren 1 und 3 bis 5 könnte die Spindel auch über den Getriebeblock rotierend antreibbar gelagert sein. Es würde dann eine gegen Drehung gesicherte Spindelmutter oder mehrere Spindelmuttern jeweils mit einem Hubrohr ausgestattet sein, um das entsprechende Bauteil zu verstellen. Das Hubrohr wäre entweder in einem Flanschrohr geführt oder durch einen Faltenbalg abgeschirmt. In einer weiteren Ausführung könnte die Ausführung nach der Figur 1 und auch die nach den Figuren 3 bis 5 so ausgelegt sein, daß die Spindel 14 gegen Drehung gesichert wäre, so daß sich dann das Gehäuse 11 mit den darin angeordneten Antriebselementen verschiebt. Das Gehäuse wäre dann sinngemäß das Abtriebsglied des elektromotorischen Stelltriebes 10.

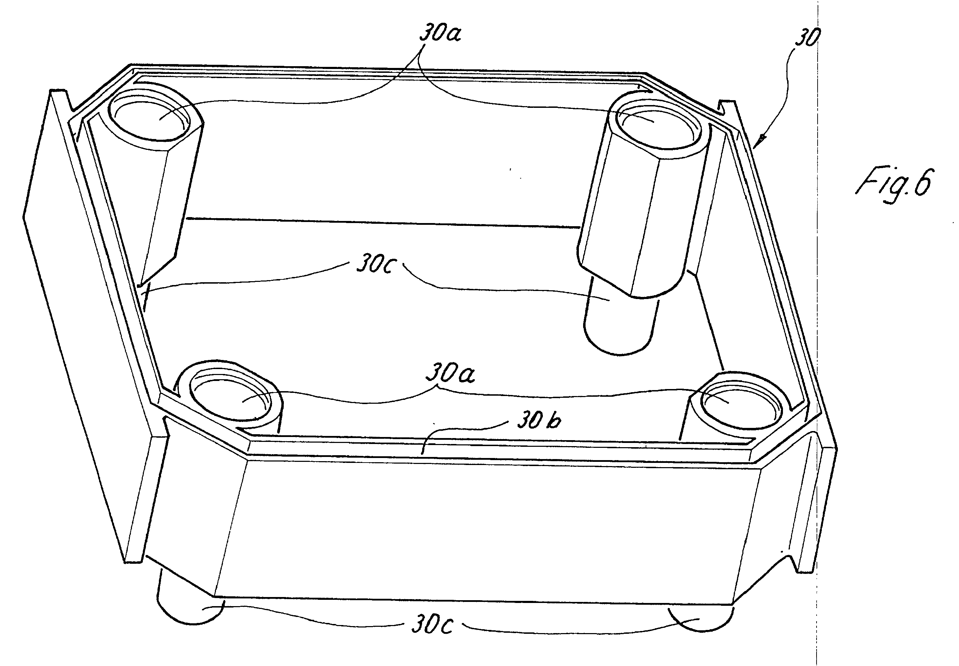

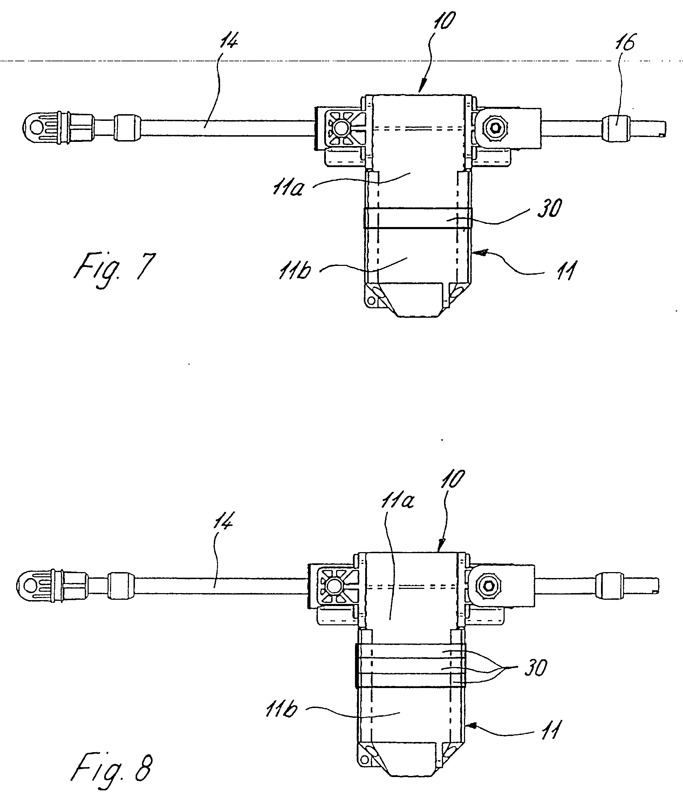

Die Figur 6 zeigt einen Distanzring 30, der zwischen die Gehäuseteile 11a und 11b angeordnet werden kann. Die Figur 7 zeigt, daß zur Vergrößerung des Gehäuses 11 zwischen den Gehäuseteilen 11a und 11 ein Distanzring angeordnet werden kann. Die Figur 8 zeigt, daß zur Vergrößerung des Gehäuses auch mehrere gleich gestaltete Distanzringe 30 angeordnet werden können. Im dargestellten Ausführungsbeispiel sind es drei Distanzringe 30. Die Anzahl kann jedoch variiert werden. Die Außenkontur des Distanzringes 30 entspricht den äußeren Konturen der Gehäuseteile 11a, 11b, so daß dadurch keine Ansätze oder dergleichen gebildet werden. Jeder Distanzring 30 ist mit 4 in den Eckbereichen angeordneten Durchsteckkanälen 30a ausgestattet. Diese Durchsteckkanäle 30a sind aus einem rohrähnlichen Stück gebildet, welches an der einen Seite einen im Durchmesser geringer gehaltenen Ansatz 30c aufweist, der zur Zentrierung in den Durchsteckkanal 30a des angrenzenden Distanzringes 30 eingreift. Außerdem ist jeder Distanzring 30 an der dem Ansatz 30c abgewandten Seite mit einem Zentrieransatz 30b ausgestattet, der gegenüber der äußeren Kontur nach innen verspringt. Das den Ansätzen 30c zugeordnete Ende jedes Distanzringes 30 ist entgegengesetzt gestaltet, d.h. der Zentrieransatz hat außen die äußere Kontur der Gehäuseteile 11a, 11b und der Zentrieransatz verspringt von innen her, so daß ein Übergreifen gegeben ist.

Die Erfindung ist nicht auf die dargestellten Ausführungsbeispiele beschränkt, da der elektromotorische Stelltrieb 10 nach einem Baukastensystem aufgebaut ist, und bei dem zumindest das Abtriebsglied des Getriebeblockes in verschiedenen Ausführungen montierbar ist. Ferner ist besonders vorteilhaft, wenn die Anschlußteile 15 auswechselbar sind. Ferner ist es zweckmäßig, wenn die Befestigungselemente 26, 27 ebenfalls auswechselbar sind und darüber hinaus noch verschwenkt werden können.

## Patentansprüche

1. Elektromotorischer Stelltrieb, insbesondere Möbelantrieb, der zur Erzeugung einer Linearbewegung und/oder Drehbewegung mit einem Gehäuse (11) ausgestattet ist, in dem zumindest ein Motor und ein die Motordrehzahl reduzierender Getriebeblock angeordnet sind, dessen Abtriebsglied als Rotationskörper ausgebildet ist, der in einer ersten Ausführung mit einer zentrischen Innengewindebohrung versehen ist, in die eine Spindel in eingedreht ist, **dadurch gekennzeichnet, dass** der elektromotorische Stelltrieb (10) nach art eines Baukastensystems ansgelegt ist, wobei zumindest das Abtriebsglied in verschiedenen Ausführungen montierbar ist, so dass in einer zweiten Ausführung der Rotationskörper anstelle der Innengewindebohrung mit einer zentrischen, insbesondere mehreckigen Bohrung ausgestattet ist, und dass das Koppelelement (14, 25) eine schließend und formschlüssig darin eingesetzte Profilstange (25) ist, und dass in einer dritten Ausführung an zwei senkrecht zum Koppelelement (14, 25) stehenden Wänden des Gehäuses (11) Aufnahmeelemente (17, 18) für feststehende Flanschführungsrohre festgelegt sind.

2. Elektromotorischer Stelltrieb nach Anspruch 1, **dadurch gekennzeichnet, dass** das Abtriebsglied des Getriebeblockes als Rotationskörper als Schneckenrad ausgebildet ist, und dass das Koppelelement (19,25) eine drehfest mit dem Rotationskörper verbundene Gewindespindel (14) ist.

3. Elektromotorischer Stelltrieb nach Anspruch 2, **dadurch gekennzeichnet, dass** auf die Gewindespindel (14) eine gegen Drehung gesicherte Spindelmutter aufgesetzt ist.

4. Elektromotorischer Stelltrieb nach Anspruch 3, **dadurch gekennzeichnet, dass** auf die Spindelmutter ein Hubrohr aufgesetzt ist, dessen freies Ende ein Anschlussteil, vorzugsweise einen Gabelkopf (15) trägt.

5. Elektromotorischer Stelltrieb nach Anspruch 1, **dadurch gekennzeichnet, dass** das Gehäuse (11) entweder derart feststehend angeordnet ist, dass die gegen Drehung gesicherte Gewindespindel (14) sich in ihrer Längsrichtung verschiebt, oder dass das Gehäuse (11) mittels einer Längsführung geführt ist und sich in Längsrichtung durch die rotierend antreibbare Spindel (14) bewegt.

6. Elektromotorischer Stelltrieb nach einem oder mehreren der vorhergehenden Ansprüche 1 bis 5, **dadurch gekennzeichnet, dass** das die Anschlussteile (15, 16) auswechselbar am Koppelelement (14, 25) angeordnet sind.

7. Elektromotorischer Stelltrieb nach einem oder mehreren der vorhergehenden Ansprüche 1 bis 6, **dadurch gekennzeichnet, dass** das Gehäuse (11), vorzugsweise das als Motortopf ausgebildete Gehäuseteil (11a) eine Kabelaufnahme (13) oder eine Kabelverschraubung aufweist, die vorzugsweise im Versatz zu den Anschlüssen des Motors steht.

8. Elektromotorischer Stelltrieb nach einem oder mehreren der vorhergehenden Ansprüche 1 bis 7, **dadurch gekennzeichnet, dass** auf die gegenüber dem Gehäuse (11) vorstehenden Teile des Koppelelementes (14) jeweils ein Faltenbalg (21, 22) gestülpt ist, der mit einem Ende am Gehäuse (11) und mit dem anderen Ende an einem ausfahrbaren Bauelement festgelegt ist.

9. Elektromotorischer Stelltrieb nach einem oder mehreren der vorhergehenden Ansprüche 1 bis 8, **dadurch gekennzeichnet, dass** auf die Spindel (14) an einem Endbereich ein Anschlussteil vorzugsweise in Form eines Gabelkopfes (15) aufgesetzt ist, und dass auf den anderen Endbereich der Spindel (14) eine Abdeckkappe (16) aufgestülpt ist.

10. Elektromotorischer Stelltrieb nach einem oder mehreren der vorhergehenden Ansprüche 1 bis 9, **dadurch gekennzeichnet, dass** das Gehäuse (11) bzw. die Gehäuseteile (11a, 11b) im Grundquerschnitt viereckig gestaltet sind, und das zwei in Richtung so wie im Versatz zur Motordrehachse stehende Wände des Gehäuses (11) vorzugsweise des Gehäuseteiles (11b) mit fluchtenden Lagerbohrungen versehen sind, und dass die gegenüberliegenden Bereiche des Gehäuses planparallel ausgebildet sind.

11. Elektromotorischer Stelltrieb nach einem oder mehreren der vorhergehenden Ansprüche 1 bis 10, **dadurch gekennzeichnet, dass** das Gehäuse (11) aus zwei Gehäuseteilen (11a, 11b) besteht und dass die einander kontaktierenden Stoßflächen der Gehäuseteile (11a, 11b) quer zur Drehachse des Motors verlaufen.

12. Elektromotorischer Stelltrieb nach einem oder mehreren der vorhergehenden Ansprüche 1 bis 11, **dadurch gekennzeichnet, dass** an wenigstens einer Wand des Gehäuses (11) ein Aufnahme für eine Form- und/oder kraftschlüssige Festlegung des Gehäuses einer Steuereinheit angeordnet ist.

13. Elektromotorischer Stelltrieb nach einem oder mehreren der vorhergehenden Ansprüche 1 bis 12, **dadurch gekennzeichnet, dass** an bestimmten Bauelementen des Antriebes zur Verwendung bei Positionieraufgaben und/oder Wiederanfahren von bestimmten Stellungen Mittel zur Erkennung des Drehwinkels, und/oder der Geschwindigkeit, und/oder der Erkennung der Position der Antriebselemente und/oder des Motors vorgesehen sind.

14. Elektromotorischer Stelltrieb nach einem oder mehreren der vorhergehenden Ansprüche 1 bis 13, **dadurch gekennzeichnet, dass** das vorzugsweise einen Motortopfdeckel bildende Gehäuseteil (11a) mittels eines Distanzringes (30) oder durch mehrere Distanzringe mit dem Gehäuseteil (11b) verschraubt ist.

## Claims

1. Electromotive actuating drive, in particular a furniture drive, which, for the purpose of producing a linear movement and/or a rotary movement, is equipped with a housing (11) which contains at least one motor and one gear unit which reduces the rotational speed of the motor and whose output element is in the form of a rotational body which in a first embodiment is provided with a central internal threaded hole into which a spindle (14) is screwed, **characterized in that** the electromotive actuating drive (10) is of modular design, it being possible to instal at least the output element in different embodiments, so that, in a second embodiment, the rotational body is equipped with a central, in particular polygonal, hole in place of the internal threaded hole, and **in that** the coupling element (14, 25) is a profiled rod (25) which is inserted into the said hole in an interlocking manner and so as to close it, and **in that**, in a third embodiment, holding elements (17, 18) for stationary flange guide tubes are secured to two walls of the housing (11) which are perpendicular to the coupling element (14, 25).

2. Electromotive actuating drive according to Claim 1, **characterized in that** the output element of the gear unit in the form of a rotational body is in the form of a worm gear, and **in that** the coupling element (14, 25) is a threaded spindle (14) which is connected to the rotational body such that they rotate together.

3. Electromotive actuating drive according to Claim 2, **characterized in that** a spindle nut which is secured against rotation is fitted on the threaded spindle (14).

4. Electromotive actuating drive according to Claim 3, **characterized in that** a lifting tube is fitted on the spindle nut and its free end has a connection part, preferably a fork head (15).

5. Electromotive actuating drive according to Claim 1, **characterized in that** the housing (11) is arranged either in a stationary manner such that the threaded spindle (14) which is secured against rotation moves in its longitudinal direction, or that the housing (11) is guided by means of a longitudinal guide and is moved in the longitudinal direction by the spindle (14) which can be driven to rotate.

6. Electromotive actuating drive according to one or more of the preceding Claims 1 to 5, **characterized in that** the connection parts (15, 16) are arranged on the coupling element (14, 25) such that they can be replaced.

7. Electromotive actuating drive according to one or more of the preceding Claims 1 to 6, **characterized in that** the housing (11), preferably the housing part (11a) which is in the form of a motor pot, has a cable holder (13) or a screwed cable gland which is preferably offset in relation to the connections of the motor.

8. Electromotive actuating drive according to one or more of the preceding Claims 1 to 7, **characterized in that** bellows (21, 22) are placed on each of the parts of the coupling element (14) which project from the housing (11), and are secured to the housing (11) at one end and to a component which can be extended at the other end.

9. Electromotive actuating drive according to one or more of the preceding Claims 1 to 8, **characterized in that** a connection part, preferably in the form of a fork head (15), is fitted to one end region of the spindle (14), and **in that** a covering cap (16) is placed on the other end region of the spindle (14).

10. Electromotive actuating drive according to one or more of the preceding Claims 1 to 9, **characterized in that** the base cross section of the housing (11) or of the housing parts (11a, 11b) is rectangular, and **in that** two walls of the housing (11), preferably of the housing part (11b), which run in the same direction as and are offset in relation to the axis of rotation of the motor are provided with aligned bearing holes, and **in that** the opposite regions of the housing are plane-parallel.

11. Electromotive actuating drive according to one or more of the preceding Claims 1 to 10, **characterized in that** the housing (11) comprises two housing parts (11a, 11b), and **in that** the abutting surfaces of the housing parts (11a, 11b) which make contact with one another run transversely to the axis of rotation of the motor.

12. Electromotive actuating drive according to one or more of the preceding Claims 1 to 11, **characterized in that** a holding device for securing the housing of a control unit in an interlocking and/or force-fitting manner is arranged on at least one wall of the housing (11).

13. Electromotive actuating drive according to one or more of the preceding Claims 1 to 12, **characterized in that** means for detecting the angle of rotation and/or the speed and/or for detecting the position of the drive elements and/or of the motor are provided on specific components of the drive for use during positioning tasks and/or when continuing on from specific positions.

14. Electromotive actuating drive according to one or more of the preceding Claims 1 to 13, **characterized in that** the housing part (11a) which preferably forms a motor pot cover is screwed to the housing part (11b) by means of a spacer ring (30) or by a plurality of spacer rings.

## Revendications

1. Mécanisme de réglage à moteur électrique en particulier mécanisme de commande de meuble, qui pour produire un mouvement linéaire et/ou un mouvement de rotation est équipé d'un boîtier (11) dans lequel sont disposés au moins un moteur et un bloc transmission réduisant la vitesse de rotation du moteur dont l'organe mené est réalisé en tant que corps rotatif qui est pourvu, dans une première forme de réalisation, d'un trou taraudé centré dans lequel est vissée une broche (14), **caractérisé en ce que** le mécanisme de réglage à moteur électrique (10) est conçu selon un système modulaire, au moins l'organe mené pouvant être monté dans différentes formes de réalisation, de manière que dans une deuxième forme de réalisation le corps rotatif soit équipé, à la place du trou taraudé, d'un perçage centré, en particulier polygonal, et **en ce que** l'élément d'accouplement (14, 25) est une barre profilée (25) insérée à l'intérieur de celui-ci par complémentarité de formes et de manière à le fermer, et **en ce que** dans une troisième forme de réalisation, des éléments de réception (17, 18) pour des tubes de guidage fixes à bride sont fixés sur deux parois, perpendiculaires à l'élément d'accouplement (14, 25), du boîtier (11).

2. Mécanisme de réglage à moteur électrique selon la revendication 1, **caractérisé en ce que** l'organe mené du bloc de transmission est réalisé en tant que corps rotatif sous la forme d'une roue-vis et **en ce que** l'élément d'accouplement (14, 25) est une broche filetée (14) reliée solidairement en rotation au corps rotatif.

3. Mécanisme de réglage à moteur électrique selon la revendication 2, **caractérisé en ce que** sur la broche filetée (14) est placé un écrou pour broche bloqué en rotation.

4. Mécanisme de réglage à moteur électrique selon la revendication 3, **caractérisé en ce que** sur l'écrou pour broche est placé un tube de levage dont l'extrémité libre porte un élément de raccordement, de préférence une tête fourchue (15).

5. Mécanisme de réglage à moteur électrique selon la revendication 1, **caractérisé en ce que** le boîtier (1) est disposé soit de manière fixe, de façon que la broche filetée (14) bloquée en rotation coulisse dans sa direction longitudinale, soit que le boîtier (11) soit guidé au moyen d'un guide longitudinal et se déplace dans la direction longitudinale du fait de la broche (14) pouvant être entraînée en rotation.

6. Mécanisme de réglage à moteur électrique selon une ou plusieurs des revendications 1 à 5 précédentes, **caractérisé en ce que** les éléments de raccordement (15, 16) sont disposés de manière échangeable sur l'élément d'accouplement (14, 25).

7. Mécanisme de réglage à moteur électrique selon une ou plusieurs des revendications 1 à 6 précédentes, **caractérisé en ce que** le boîtier (11), de préférence la partie de boîtier (11a) réalisée en tant que pot de moteur, présente un logement pour câble (13) ou un vissage pour câble qui est de préférence décalé par rapport aux connexions du moteur.

8. Mécanisme de réglage à moteur électrique selon une ou plusieurs des revendications 1 à 7 précédentes, **caractérisé en ce que** sur chacune des parties de l'élément d'accouplement (14), dépassant du boîtier (11), est emboîté un soufflet (21, 22) qui, par une extrémité, est fixé au boîtier (11) et, par l'autre extrémité, à un élément de construction extractible.

9. Mécanisme de réglage à moteur électrique selon une ou plusieurs des revendications 1 à 8 précédentes, **caractérisé en ce que** sur la broche (14) est placé, dans une zone d'extrémité, un élément de raccordement de préférence sous la forme d'une tête fourchue (15), et **en ce que** sur l'autre zone d'extrémité de la broche (14) est emboîté un capuchon de recouvrement (16).

10. Mécanisme de réglage à moteur électrique selon une ou plusieurs des revendications 1 à 9 précédentes, **caractérisé en ce que** le boîtier (11) ou les parties de boîtier (11a, 11b) présentent une section transversale de base rectangulaire, et **en ce que** deux parois du boîtier (11), de préférence de la partie de boîtier (11b), dans la direction de l'axe de rotation du moteur, et décalées par rapport à celui-ci, sont pourvues de perçages de palier alignés, et **en ce que** les zones opposées du boîtier sont planes et parallèles.

11. Mécanisme de réglage à moteur électrique selon une ou plusieurs des revendications 1 à 10 précédentes, **caractérisé en ce que** le boîtier (11) est constitué de deux parties de boîtier (11a, 11b) et **en ce que** les surfaces jointives en contact l'une avec l'autre des parties de boîtier (11a, 11b) s'étendent transversalement à l'axe de rotation du moteur.

12. Mécanisme de réglage à moteur électrique selon une ou plusieurs des revendications 1 à 11 précédentes, **caractérisé en ce que** sur au moins une paroi du boîtier (11) est disposé un logement pour une fixation par complémentarité de formes et/ou à force du boîtier d'une unité de commande.

13. Mécanisme de réglage à moteur électrique selon une ou plusieurs des revendications 1 à 12 précédentes, **caractérisé en ce que** sur des éléments de construction déterminés du mécanisme d'entraînement, sont prévus des moyens, destinés à être utilisés dans des tâches de positionnement et/ou de reprise de positions déterminées, pour reconnaître l'angle de rotation et/ou la vitesse, et/ou la reconnaissance de la position des éléments d'entraînement et/ou du moteur.

14. Mécanisme de réglage à moteur électrique selon une ou plusieurs des revendications 1 à 13 précédentes, **caractérisé en ce que** la partie de boîtier (11a), formant de préférence un couvercle du pot du moteur, est vissée au moyen d'une bague d'écartement (30) ou par plusieurs bagues d'écartement, avec la partie de boîtier (11b).
